# EUROPEAN PATENT APPLICATION

(11) **EP 2 451 118 A1**
(43) Date of publication of application: **09.05.2012**
(21) Application number: 10793535.5
(22) Date of filing: 13.05.2010
(51) Int. Cl.: H04L 12/24

(54) **METHOD AND SYSTEM FOR PROCESSING THE FAILURES OF AGENTS AT CALL CENTER**

(30) Priority: 03.07.2009 CN 200910150123
(71) Applicant: ZTE Corporation, Shenzhen, Guangdong 518057 (CN)
(72) Inventor: YUE, Min, Shenzhen Guangdong 518057 (CN); WU, Weiwei, Shenzhen Guangdong 518057 (CN)
(74) Representative: Hannke, Christian
(86) International application number: PCT/CN2010/072753
(87) International publication number: WO 2011/000240

(57) **Abstract**

A method and system for processing a fault of an agent at a call center are provided. The method comprises: generating a standby agent list and forming a fault detection message; maintaining a communication link with a communication network; selecting a standby agent from a standby agent list to receive service interaction data; and setting up a call service with the standby agent. The system comprises: an Agent Supervisor Module (ASM) configured for generating a standby agent list and forming a fault detection message; an Agent Service Information Module (ASIM), connected with the ASM and configured for recording service interaction data and sending it; a Call Control Module (CCM), connected with the ASM and configured for selecting a standby agent from the standby agent list; and an Access Control Module (ACM), connected with the CCM and configured for maintaining a communication link with a communication network and setting up a call service with the standby agent. Therefore, the present application realizes that a call center can switch a user to a standby agent to continue the service flow in the case of maintaining the call connection, so that the quality of service is improved.

## Description

### TECHNICAL FIELD

This disclosure relates to the technical field of communications, and in particular to a method and system for processing a fault of an agent at a call center.

### BACKGROUND

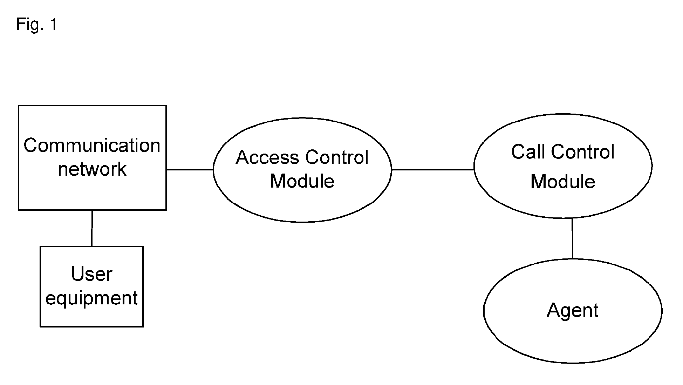

A call center is a multimedia customer service center which converges multiple access technologies and fully utilizes the computer technology so as to automatically and flexibly process various telephone services. At present, a relatively advanced call center generally consists of an Access Control Module (ACM), a Calling Control Module (CCM) and staff agents (Agents), as shown in Fig. 1 which is a schematic diagram of an existing call center. User Equipment (UE) accesses a call to the ACM through a communication network; the ACM converts a signaling flow coming from a bottom layer into a standard internal instruction and sends it to the CCM; and the CCM selects an agent to serve a calling user by its own queuing and routing functions according to the instruction.

However, one agent often fails to continue the service due to a sudden failure during serving a user, and an existing call center can only notify the user to hang up to terminate the service, but cannot switch the user to a standby agent to continue the interrupted service flow.

Nowadays, the only solution for the above problem is that the user must redial and restart the service flow, and the main reasons for this include three aspects: 1) the existing call center lacks an effective Agent Supervisor Module (ASM), although the CCM can supervise the agents to a certain extent, it is imperfect in function and poor in real-time performance; 2) the existing call center lacks storage equipment for relevant user interaction information, even if one agent can be successfully switched to another agent, the service flow information of the user has been lost, so the service has to be restarted; and 3) the existing call center lacks a set of emergency processing methods for the agent's faults.

### SUMMARY

The technical problem to be solved by the present application is to provide a method and system for processing a fault of an agent at a call center, in order to solve the problem that an agent at fault cannot be switched to other normal agents during the maintaining of the call connection in the prior art.

To solve the above technical problem, the present application provides a method for processing a fault of an agent at a call center, comprising:
step a: after a fault of an agent occurs in a call service process, generating a standby agent list and forming a fault detection message;
step b: maintaining a communication link for the call service between the call center and a communication network according to the fault detection message;
step c: selecting a standby agent from the standby agent list which is determined to be nonempty to receive service interaction data recorded in the call service process before the fault occurs; and
step d: notifying the communication network to set up the call service with the standby agent.

The fault detection message may comprise: information of the agent at fault and the standby agent list.

While maintaining the communication link for the call service with the communication network, the method may further comprise: disconnecting the communication link for the call service between the communication network and the agent at fault according to the information of the agent at fault in the fault detection message.

Between the step b and step c, the method may further comprise: after determining that the standby agent list is empty, sending a playback signaling to the communication network and waiting to acquire a nonempty standby agent list within a cycle time.

Before the step a, the method may further comprise: supervising a working state of the agent and recording the service interaction data of the agent in the call service process.

The step c may specifically comprise:
a CCM selects a standby agent from the standby agent list which is determined to be nonempty, and sends an emergency call request message;
the standby agent returns a response signal to the CCM after receiving the emergency call request message;
the CCM sends a service interaction data transmission request to an Agent Supervisor Module (ASM); and
the ASM controls an Agent Service Information Module (ASIM) to send the service interaction data to the standby agent.

The present application further provides a system for processing a fault of an agent at a call center, comprising: an ASM, an ASIM, a CCM and an ACM, wherein
the ASM is configured for generating a standby agent list and forming a fault detection message after obtaining through supervising that a fault of an agent occurs in a call service process;
the ASIM is connected with the ASM and configured for recording, under the control of the ASM, service interaction data in the call service process before the fault occurs, and sending the service interaction data to a selected standby agent;
the CCM is connected with the ASM and configured for receiving the fault detection message, and selecting a standby agent from the standby agent list which is determined to be nonempty; and
the ACM is connected with the CCM and configured for maintaining a communication link for the call service with a communication network according to the fault detection message, and notifying the communication network to set up the call service with the standby agent.

The CCM may be further configured for sending a playback signaling to the ACM and waiting to acquire a nonempty standby agent list after determining that the standby agent list is empty.

The CCM may be further configured for disconnecting the communication link for the call service between the CCM and the agent at fault according to the information of the agent at fault in the fault detection message.

Therefore, according to the system and method for processing a fault of an agent at a call center in the present application, the CCM notifies, according to the fault detection message, the ACM to maintain the communication link for the call service with the communication network and selects a standby agent from a standby agent list, so that the call center can switch a user to a standby agent to continue the service flow during the maintaining of the call connection, and therefore the quality of service is improved.

### BRIEF DESCRIPTION OF THE DRAWINGS

Fig. 1 is a schematic diagram of an existing call center;
Fig. 2 is a flowchart of a method for processing a fault of an agent at a call center in Embodiment 1 according to the present application;
Fig. 3 is a flowchart of a method for processing a fault of an agent at a call center in Embodiment 2 according to the present application; and
Fig. 4 is a diagram of a system for processing a fault of an agent at a call center according to the present application.

### DETAILED DESCRIPTION

The technical solution of embodiments in the present application will be further described in detail with reference to the drawings and the embodiments.

A method for processing a fault of an agent at a call center according to the present application is implemented under the following two circumstances: one is that there is an idle standby agent; and the other is that there is no idle standby agent. The two circumstances will be described in detail respectively.

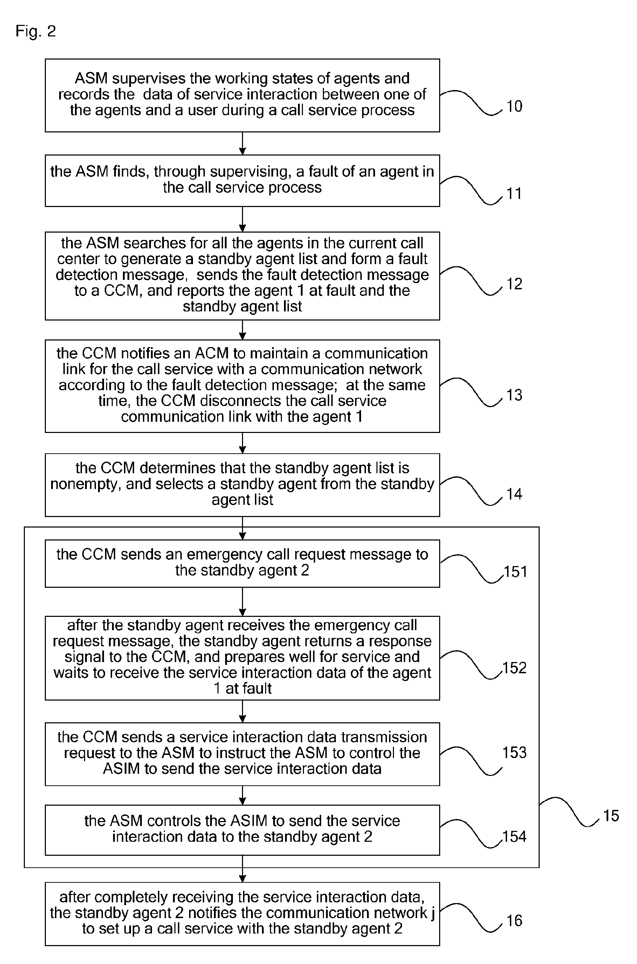

Fig. 2 is a flowchart of a method for processing a fault of an agent at a call center in Embodiment 1 according to the present application. The first circumstance that there is an idle standby agent is described in the Embodiment 1; as shown in Fig. 2, the method comprises the following steps.

Step 10: an Agent Supervisor Module (ASM) supervises the working states of agents and notifies an Agent Service Information Module (ASIM) to record service interaction data during a call service process between a user and one of the agents, such as agent 1.
Step 11: the ASM supervises the agents and finds a fault of an agent in the call service process.
Step 12: the ASM searches for all the agents at the current call center to generate a standby agent list and form a fault detection message, and the ASM sends the fault detection message to a CCM and reports the agent 1 at fault and the standby agent list, wherein the fault detection message includes the information of the agent at fault and the standby agent list.
Step 13: the CCM notifies an Access Control Module (ACM) to maintain a communication link for the call service with a communication network according to the fault detection message, that is, the CCM sends a link maintenance request message to the ACM, and the ACM sends a link maintaining signaling to the communication network to prevent the communication link between the user and the call center from being disconnected; at the same time, the CCM disconnects the communication link for the call service with the agent 1; of course, the disconnection of the communication link for the call service with the agent 1 can also be implemented after determining the standby agent 2 to which the agent 1 is to be switched; and it is realized in this step that the communication link for the call service is still maintained with the communication network after the fault occurs.
Step 14: the CCM determines that the standby agent list is nonempty, and selects a standby agent, such as the agent 2, from the standby agent list.
Step 15: the standby agent 2 receives the service interaction data recorded in the call service process before the fault occurs; the specific process of this step comprises:
   step 151: the CCM sends an emergency call request message to the standby agent 2;
   step 152: after the standby agent receives the emergency call request message, the standby agent returns a response signal to the CCM, and prepares well for service, waiting to receive the service interaction data of the agent 1 at fault;
   step 153: the CCM sends a service interaction data transmission request to the ASM to instruct the ASM to control the ASIM to send the service interaction data; and
   step 154: the ASM controls the ASIM to send the service interaction data to the standby agent 2. The switching from the agent at fault to the standby agent is realized in this step.
Step 16: after completely receiving the service interaction data, the standby agent 2 is connected to the CCM to continue serving the user; and the CCM sends a link recovery request to the ACM, and the ACM sends a call recovery signaling to the communication network to notify it to set up a call service with the standby agent 2.

In the above flow, the ACM, CCM, ASM and ASIM cooperate together to complete the switching between the agents. Viewed from the communication network, the whole switching flow is transparent and smooth, so the user does not obviously detect the switching to the standby agent.

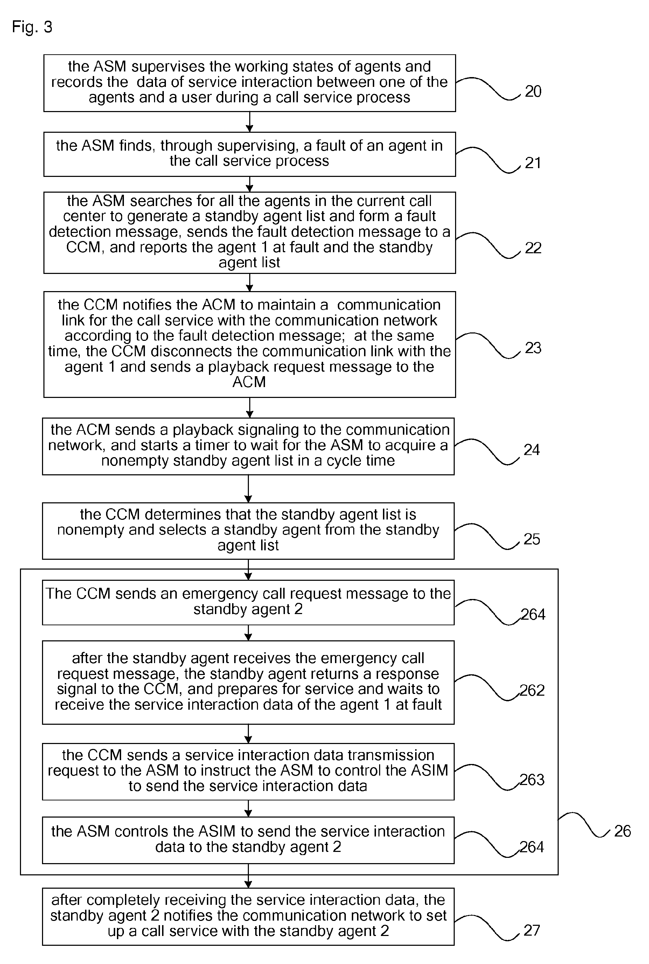

Fig. 3 is a flowchart of a method for processing a fault of an agent at a call center in Embodiment 2 according to the present application. The second circumstance that there is no idle standby agent is described in the Embodiment 2; as shown in Fig. 3, the method comprises the following steps.
Step 20: the ASM supervises the working states of agents and records service interaction data during a call service process between a user and one of the agents, such as agent 1.
Step 21: the ASM supervises the agents and finds a fault of an agent in the call service process.
Step 22: the ASM searches for all the agents in the current call center to generate a standby agent list and form a fault detection message, and the ASM sends the fault detection message to a CCM and reports the agent 1 at fault and the standby agent list, wherein the fault detection message includes the information of the agent at fault and the standby agent list.
Step 23: the CCM notifies the ACM to maintain a communication link for the call service with the communication network according to the fault detection message, that is, the CCM sends a link maintenance request message to the ACM, and the ACM sends a link maintaining signaling to the communication network to prevent the communication link between the user and the call center from being disconnected; at the same time, the CCM disconnects the communication link for the call service with the agent 1, at which moment the CCM finds out that the standby agent list is empty, and it sends a playback request message to the ACM besides the link maintenance request message; of course, the disconnection of the communication link for the call service with the agent 1 can also be implemented after determining the standby agent 2 to which the agent 1 is to be switched; and

it is realized in this step that the communication link for the call service is still maintained with the communication network after the fault occurs.
Step 24: the ACM sends a playback signaling to the communication network and starts a timer to wait for the ASM to acquire a nonempty standby agent list in a cycle time, that is, when the ASM detects that there is an idle agent, the ASM sends a nonempty standby agent list to the CCM. Here, there may exist an unforeseen circumstance, that is, if the ASM still cannot provide a nonempty standby agent list to the CCM within a certain time, the CCM will send a hang-up signaling to the ACM to notify the user that the fault cannot be recovered, and release a call line, i.e., ending the call service.
Step 25: the CCM determines that the standby agent list is nonempty and selects a standby agent, such as the agent 2, from the standby agent list.
Step 26: the standby agent 2 receives the service interaction data recorded in the call service process before the fault occurs; the specific process of this step comprises:
   step 261: the CCM sends an emergency call request message to the standby agent 2;
   step 262: after the standby agent receives the emergency call request message, the standby agent returns a response signal to the CCM, and prepares well for service, waiting to receive the service interaction data of the agent 1 at fault;
   step 263: the CCM sends a service interaction data transmission request to the ASM to instruct the ASM to control the ASIM to send the service interaction data; and
   step 264: the ASM controls the ASIM to send the service interaction data to the standby agent 2. The switching from the agent at fault to the standby agent is realized in this step.
Step 27: after completely receiving the service interaction data, the standby agent 2 is connected to the CCM to continue serving the user; and the CCM sends a link recovery request to the ACM, and the ACM sends a call recovery signaling to the communication network to notify the communication network to set up a call service with the standby agent 2.

The difference between the flows in the Embodiments 1 and 2 lies in that, the step 24 is additionally added based on the steps 13 and 14 in the Embodiment 1, that is, when the standby agent list is empty, it is further necessary to perform playback and acquire a standby agent list in the period of the timer.

The Embodiments 1 and 2 only describe the case that one agent is at fault; when multiple agents are at fault, the queuing function of the CCM can be used to make multiple users queue and process the faults for users sequentially, that is, after the execution of the steps 11 and 12 or steps 21 and 22, the CCM knows the agents being at fault after receiving multiple fault detection messages, and makes the agents queue; and the subsequent processes shown in the Embodiments 1 and 2 are respectively performed for the agents at fault.

The service interaction data in the Embodiments 1 and 2 of the present application mainly include: user identity information, flow data generated in the service interaction process and other related information; and any agent can continue the service flow with the user by means of the service interaction data.

In the embodiments of the present application, the agent at fault can be switched automatically, thus effectively avoiding service interruption caused by the fault of the agent. Compared with the way adopted by the existing call center that a call link has to be disconnected once an agent is at fault, the present application greatly improves the service fluency and enhances the user experience.

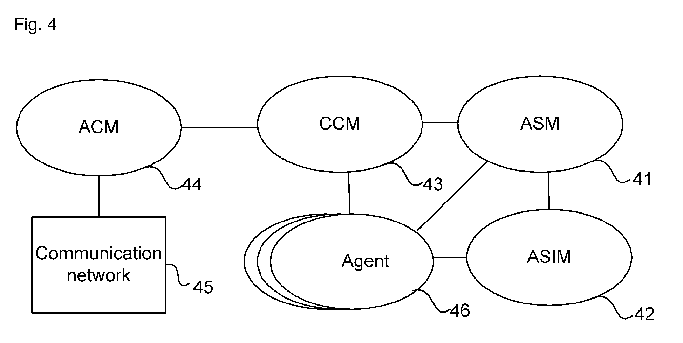

Fig. 4 is a diagram of a system for processing a fault of an agent at a call center according to the present application. As shown in Fig. 4, the system comprises: an ASM, an ASIM, a CCM, and an ACM.

As shown in Fig. 4, the system comprises: an ASM 41, configured for supervising the working states of agents, generating a standby agent list and forming a fault detection message after a fault of an agent occurs in a call service process;
an ASIM 42, connected with the ASM 41 and configured for recording, under the control of the ASM, service interaction data in the call service process before the fault occurs, and for sending the service interaction data to the standby agent;
an CCM 43, connected with the ASM 41 and configured for receiving the fault detection message, sending a link maintenance request message according to the fault detection message, and selecting a standby agent from the standby agent list which is determined to be nonempty;
an ACM 44, connected with the CCM 43 and configured for maintaining a communication link for the call service with a communication network 45 according to the link maintenance request message, and notifying the communication network to set up a call service with the standby agent. In Fig. 4, an Agent 46 represents agents at fault and standby agents, i.e., representing multiple agents.

The ACM is generally configured for converting call signalings. The ACM converts different call access signalings coming from a communication network into internal call processing events and notifies the CCM of them. In processing a fault of an agent, the ACM is indispensable, because the communication link may be interrupted after a fault of an agent occurs, resulting in the hang-up of the user. At this moment, the ACM can send a call maintenance signaling to the communication network under the control of the CCM to maintain the communication link from the user to the call center, thereby providing assurance for the switching of the agent.

The CCM is generally configured for a call control. The CCM module can manage, distribute and maintain agent resources. The CCM ensures effective distribution and maintenance of the agent resources by its own routing function, queuing function and connection function according to calling, ending and other events from the ACM. In the fault processing system according to the present application, the CCM is further configured for sending a playback signaling to the ACM and waiting to acquire a nonempty standby agent list after determining that the standby agent list is empty, and for disconnecting the communication link for the call service with the agent at fault according to the information of the agent at fault in the fault detection message. The fault detection message comprises: the information of the agent at fault and the standby agent list.

In the fault processing system, the ASM supervises the working states of agents and notifies the ASIM to store the service interaction data of the agents. The ASM module is connected with the ACM, Agent and ASIM, and can detect the working state of each agent in real time and notify the ASIM to record the service interaction data of each agent in normal service in real time. Once an agent cannot continue serving a user due to a fault in a service process, the ASM module will report the agent at fault to the CCM and generate an idle standby agent information list for the CCM; and the CCM will select a standby agent according to the list. The ASM can further control the ASIM to send service interaction information of the agent at fault to the standby agent.

In the fault processing system, the ASIM stores data of service interaction between an agent and a user. The ASIM module is connected with the ASM module and Agent, and will record service flow data of each serving agent in real time under the control of the ASM. Once an agent is at fault, the ASM will notify the ASIM to send the stored service data to a standby agent to continue the service flow. The service interaction data mainly comprises: user identity information, flow data generated in the service interaction process and other related information, and any agent can use the service interaction data to continue the service flow with the user.

The system and method for processing a fault of an agent at a call center extend the functions of an existing call center to enable the call center to process service interruption caused by a fault of an agent in time. By means of the system, the user experience can be enhanced, and the quality of service can be further improved. Meanwhile, the present application has a very important realistic effect on call centers of the public health department, security department and the like.

At last, it should be explained that, the embodiments above are only intended to describe the technical solution of the present application instead of limiting it; although the present application is described in detail with reference to the preferred embodiments, those skilled in the art should understand that modifications, changes or equivalent replacements can be made within the spirit and scope of the present application and claims.

## Claims

1. A method for processing a fault of an agent at a call center, comprising:
step a: after a fault of an agent occurs in a call service process, generating a standby agent list and forming a fault detection message;
step b: maintaining a communication link for the call service between the call center and a communication network according to the fault detection message;
step c: selecting a standby agent from the standby agent list which is determined to be nonempty to receive service interaction data recorded in the call service process before the fault occurs; and
step d: notifying the communication network to set up the call service with the standby agent.

2. The method according to claim 1, wherein the fault detection message comprises: information of the agent at fault and the standby agent list.

3. The method according to claim 2, further comprising:
disconnecting the communication link for the call service between the communication network and the agent at fault according to the information of the agent at fault in the fault detection message, while maintaining the communication link for the call service with the communication network.

4. The method according to claim 3, further comprising between the step b and step c:
after determining that the standby agent list is empty, sending a playback signaling to the communication network and waiting to acquire a nonempty standby agent list within a cycle time.

5. The method according to any one of claims 1 to 4, further comprising before the step a:
supervising a working state of the agent, and recording the service interaction data of the agent in the call service process.

6. The method according to any one of claims 1 to 4, wherein the step c specifically comprises:
a Call Control Module (CCM) selects a standby agent from the standby agent list which is determined to be nonempty, and sends an emergency call request message;
the standby agent returns a response signal to the CCM after receiving the emergency call request message;
the CCM sends a service interaction data transmission request to an Agent Supervisor Module (ASM); and
the ASM controls an Agent Service Information Module (ASIM) to send the service interaction data to the standby agent.

7. A system for processing a faults of an agent at a call center, comprising: an Agent Supervisor Module (ASM), an Agent Service Information Module (ASIM), a Call Control Module (CCM) and an Access Control Module (ACM), wherein
the ASM is configured for generating a standby agent list and forming a fault detection message after obtaining through supervising that a fault of an agent occurs in a call service process;
the ASIM is connected with the ASM and configured for recording, under the control of the ASM, service interaction data in the call service process before the fault occurs, and sending the service interaction data to a selected standby agent;
the CCM is connected with the ASM and configured for receiving the fault detection message, and selecting a standby agent from the standby agent list which is determined to be nonempty; and
the ACM is connected with the CCM and configured for maintaining a communication link for the call service with a communication network according to the fault detection message, and notifying the communication network to set up the call service with the standby agent.

8. The system according to claim 7, wherein the fault detection message comprises: information of the agent at fault and the standby agent list.

9. The system according to claim 8, wherein the CCM is further configured for sending a playback signaling to the ACM and waiting to acquire a nonempty standby agent list after determining that the standby agent list is empty.

10. The system according to claim 9, wherein the CCM is further configured for disconnecting the communication link for the call service between the CCM and the agent at fault according to the information of the agent at fault in the fault detection message.
